# EUROPÄISCHE PATENTSCHRIFT

(11) **EP 2 474 200 B1**
(45) Veröffentlichungstag und Bekanntmachung des Hinweises auf die Patenterteilung: **12.08.2015**
(21) Anmeldenummer: 10751906.8
(22) Anmeldetag: 31.08.2010
(51) Int. Cl.: H05B 33/08

(54) **BETRIEB VON PULSMODULIERTEN LEDS**
OPERATION OF A PULSE-WIDTH-MODULATED LED
FONCTIONNEMENT DE LED À MODULATION D'IMPULSIONS

(30) Priorität: 04.09.2009 DE 102009040283
(43) Veröffentlichungstag der Anmeldung: 11.07.2012
(73) Patentinhaber: Tridonic AG, 8755 Ennenda (CH)
(72) Erfinder: ZIMMERMANN, Michael, CH-8888 Heiligkreuz (CH); PEREIRA, Eduardo, CH-8854 Siebnen/SZ (CH); KELLER, Ueli, CH-8738 Uetliburg (CH)
(74) Vertreter: Rupp, Christian
(86) Internationale Anmeldenummer: PCT/EP2010/062711
(87) Internationale Veröffentlichungsnummer: WO 2011/026837

(56) Entgegenhaltungen:
- WO-A1-2008/108468
- DE-A1-102007 053 481
- US-A1- 2005 117 367
- US-A1- 2008 191 642

## Beschreibung

Die Erfindung betrifft eine Vorrichtung und ein Verfahren zum Betreiben von pulsmodulierten Leuchtmitteln, insbesondere LEDs. Unter "LEDs" sind dabei durchgehend auch OLEDs zu verstehen.

Derartige Vorrichtungen werden bspw. in Beleuchtungssystemen verwendet, um farbige oder flächige Beleuchtungen von Räumen, Wegen oder auch Fluchtwegen zu erreichen. Üblicherweise werden dabei die Leuchtmittel von Betriebsgeräten, wie elektronischen Vorschaltgeräten, angesteuert und bei Bedarf aktiviert. Für eine derartige Beleuchtung werden organische oder anorganische Leuchtdioden (OLED oder LED) als Lichtquelle genutzt. Für eine individuelle Anpassung der Beleuchtung an die jeweiligen Umgebungsverhältnisse weisen derartige Vorrichtungen heutzutage immer häufiger individuelle Einstellungsmöglichkeiten auf. Eine vorrangige Einstellungsmöglichkeit stellt dabei eine Dimmfunktion des Beleuchtungssystems dar. Eine solche Dimmfunktion erfolgt vorzugsweise über eine pulsmodulierte Ansteuerung der LEDs, beispielsweise eine PWM- (Pulse Width Modulation oder Puls-Weiten-Modulation) Ansteuerung.

Da die LEDs Punktlichtquellen sind und stark gebündeltes Licht ausstrahlen, werden zur Beleuchtung zumeist eine Kombination mehrerer LEDs verwendet, wobei die LEDs dann in Sichtweite voneinander liegen. Die LEDs können von einem Betriebsgerät betrieben werden, wobei diese dann bei einer Dimmung ggf. mit demselben Tastverhältnis der Puls-Modulation angesteuert werden.

Ein solches Betriebsgerät kann über mehrere Kanäle verfügen, um die LEDs individuell anzusteuern. Beispielsweise kann eine bestimmte LED-Farbe einen Kanal erhalten. Hierdurch ist es möglich, verschiedene Farbeffekte der Beleuchtung zu erzeugen.

Auf Grund des pulsmodulierten Betriebs kann jedoch, insbesondere bei einem niedrigen Dimmwert, eine Art durch den menschlichen Betrachter wahrnehmbarer Stroboskopeffekt entstehen. Dieses Problem wird im folgenden an einem Beispiel für eine Pulsweitenmodulation erläutert. Der Stroboskopeffekt resultiert daraus, dass bei einer PWM-Modulation mit einer Frequenz von beispielsweise typischerweise 100 Hz und einer Dimmung von beispielsweise 30 %, was einem PWM-Tastverhältnis von 30% entspricht, ein für das menschliche Auge wahrnehmbarer Flimmereffekt entsteht. Grund hierfür ist die relativ niedrige Frequenz und die verhältnismäßig langen Zeitdauern von 70% der PWM Periode, in denen die LEDs ausgeschaltet sind. Dieser Stroboskopeffekt ist bei LEDs besonders ausgeprägt, da diese dem stromverlauf im wesentlichen instantan folgen können und kein Nachleuchten zeigen, da LEDs im Wesentlichen instantan einen Licht-Output proportional zu ihrem durchfließenden Strom erzeugen. Dadurch werden die zeitlichen Phasen, in denen die LEDs nicht leuchten, für das menschliche Auge besonders deutlich, wodurch sich der Stroboskopeffekt verstärkt.

Beim Betrieb mehrere LEDs mit einem Betriebsgerät werden diese für gewöhnlich mit demselben PWM-Tastverhältnis angesteuert. Dadurch werden alle LEDs synchron ein- und ausgeschaltet. Dies bedeutet, dass ebenfalls bei einer solchen Beleuchtungsvorrichtung ein Stroboskopeffekt auftritt.

Eine spezielle Form des Stroboskopeffekt ist der sogenannte "beads-Effekt" dar. Dieser wird dadurch verursacht, dass eine PWM betriebene Lichtquelle relativ zum Beobachter, d.h. relativ zur menschlichen Retina bewegt wird.

Die wissenschaftliche Veröffentlichung "The analytical and experimental study of the effects of pulse width modulated light sources on visual perception"(Alexander Wernicke, Steffen Strauß), Proceedings of the 7th International Symposium on Automotive Lighting. Darmstadt, Germany, September 25-26, 2007, ISBN 978-3-8316-0711-2, beschäftigt sich mit diesem Phänomen. Die dazu ausgeführte Studie ergab, dass eine entsprechend bewegte PWM-Lichtquelle vom Auge nicht als durchgehende Linie erkannt wird, sondern als Strichlinie. Dabei hatte die Breite der Lichtquelle eine besonders negative Auswirkung auf die einzelnen Unterbrechungen der gestrichelten Linie. Insofern tritt der "beads" - Effekt besonders stark bei einer punktförmigen Lichtquelle wie bei einer LED auf. Die Studie ergab, dass zu einer Vermeidung des Werteffekts eine kritische Frequenz nicht unterschritten werden darf, die sich aus PWM-Frequenz, PWM-Tastverhältnis, der Winkelgeschwindigkeit des sich relativ bewegenden Lichtes der Lichtquelle und deren Breite berechnen lässt. Außerdem kam die Studie zu dem Ergebnis, dass aufgrund der sakkadischen Augenbewegungen, die eine sehr schnelle relative Bewegung einer fixen Lichtquelle verursachen, zu "beads" - Effekten auch bei sehr hohen Frequenzen führen. US 2008 191 642 offenbart ein Verfahren nach der Präambel von Anspruch 1.

Es ist Aufgabe der Erfindung, ein Verfahren und eine dafür ausgelegte Vorrichtung bereitzustellen, das bei einer pulsmoduliert-betriebenen Beleuchtung zu einer Vermeidung oder zumindest zu einer Verminderung/Minimierung des Stroboskopeffekts führt. Weiterhin soll somit auch ein Auftreten des "beads" - Effekt verhindert oder zumindest eingeschränkt werden.

Diese Aufgabe wird durch die Merkmale der unabhängigen Ansprüche geschützt. Die abhängigen Ansprüche bilden den zentralen Gedanken der Erfindung in besonders vorteilhafter Weise weiter.

Zentraler Gedanke zur Lösung dieses Problems gemäß der vorliegenden Erfindung ist es also, in Sichtweite liegende LEDs mit zeitlich verschobenen pulsmodulierten Taktungen derart zu betreiben, dass eine möglichst "lückenfüllende" Gesamtbeleuchtung entsteht.

Die Erfindung betrifft also ein Verfahren zum Betrieb von in Sichtweite liegenden LEDs, die pulsmoduliert betrieben werden. Dabei werden die pulsmodulierten Impulse so zeitlich aufeinander abgestimmt, dass ein pulsmodulierter Impuls einer ersten LED in der pulsmodulierten Ausschaltzeitdauer einer weiteren LED liegt.

Dabei liegt ein pulsmodulierter Impuls einer ersten LED vorzugsweise in der Mitte der pulsmodulierten Ausschaltzeitdauer einer weiteren LED.

Alternativ kann eine positive Flanke eines pulsmodulierten Pulses einer ersten LED mit der negativen Flanke eines pulsmodulierten Pulses einer weiteren LED zeitlich übereinstimmen.

Bei dem Verfahren können LEDs unterschiedliche Kanäle desselben Betriebsgeräts und/oder LEDs unterschiedlicher Betriebsgeräte hinsichtlich der zeitlichen Lage ihrer pulsmodulierten Pulse abgestimmt werden bzw. sich autonom die Betriebsgeräte aufeinander abstimmen.

Vorzugsweise erfolgt als Pulsmodulation eine Pulsweitenmodulation (Pulse Width Modulation).

Vorzugsweise kann auch wenigstens eine LED amplitudenmoduliert betrieben werden.

Dabei kann die Amplitude wenigstens einer LED verringert werden und entsprechend zur Konstanthaltung des zeitlichen Mittelwerts das LED-Stroms das pulsmodulierten Tastverhältnisses erhöht werden, falls die Mischung des Lichts der LEDs andernfalls kein Tastverhältnis von 100% erzielt.

Gemäß einem weiteren Aspekt der vorliegenden Erfindung ist ein Verfahren vorgesehen, bei dem sich wenigstens zwei Betriebsgeräte auf eine gemeinsame Zeitbasis, beispielsweise mittels signifikanter Punkte einer Netzversorgungsspannung, vorzugsweise deren Nulldurchgänge, synchronisieren.

Bei diesem Verfahren kann jedem Betriebsgerät eine Gruppenzuordnung zugewiesen werden, die angibt, wie die Lage der jeweiligen pulsmodulierten Pakete relativ zur gemeinsamen Zeitbasis erfolgen soll.

Eine solche Gruppenzuordnung erfolgt vorzugsweise über einen Busbefehl oder über eine direkte Eingabe am Betriebsgerät. Die direkte Eingabe kann auch manuell erfolgen.

Weiterhin kann ein erstes Betriebsgerät eine autonome Abstimmung mit einem zweiten Betriebsgerät vornehmen, in dem das erste Betriebsgerät die zeitliche Lage der pulsmodulierten Pakete des zweiten Betriebsgeräts erfasst und sich zeitlich darauf abstimmt.

In einer bevorzugten Ausführung wird die zeitliche Lage der pulsmodulierten Pakete des zweiten Betriebsgeräts in Relation zu einer gemeinsamen Zeitbasis zwischen dem ersten und dem zweiten Betriebsgerät bestimmt. Dabei kann die gemeinsame Zeitbasis beispielsweise aus signifikanten Punkten einer Netzversorgungsspannung, vorzugsweise deren Nulldurchgänge, resultieren.

Die Erfassung der zeitlichen Lage der pulsmodulierten Pulse des zweiten Betriebsgeräts durch das erste Betriebsgerät erfolgt vorzugsweise über einen Lichtsensor.

Die Erfindung betrifft auch eine Schaltung, insbesondere eine integrierte Schaltung wie einen µc oder ASIC, die zur Durchführung eines wie oben beschriebenen Verfahrens ausgelegt ist.

Schließlich betrifft die Erfindung ein Betriebsgerät für eine oder mehrere LEDs. Dieses weist dabei eine Ansteuerschaltung zum Ansteuern der mindestens einen LED, die einen Versorgungsstrom in für die mindestens eine LED geeignete Parameter umwandelt. Außerdem weist sie eine Schaltung auf, insbesondere eine integrierte Schaltung wie einen µc oder ASIC, die zur Durchführung eines wie oben beschriebenen Verfahrens ausgelegt ist. Diese steuert dabei die Ansteuerschaltung über Puls-Modulation und/oder Amplituden-Modulation.

Letztendlich betrifft die Erfindung noch ein Beleuchtungssystem, das mindestens ein Betriebsgerät, wie es oben beschrieben ist, und einen Kommunikations- und/oder Stromversorgungsbus aufweist.

Weitere Eigenschaften, Vorteile und Merkmale werden nunmehr anhand der folgenden Beschreibung der Ausführungsbeispiele und unter Bezugnahme auf die Figuren der begleitenden Zeichnungen vermittelt.

Dabei zeigen:
- Fig. 1: ein Zeitdiagramm zweier PWM-betriebener Kanäle, wie aus dem Stand der Technik bekannt,
- Fig. 2: eine erste erfindungsgemäße Ausführungsform einer PWM-Ansteuerung der zwei Kanäle bei einem Tastverhältnis von 50%,
- Fig. 3: die erste erfindungsgemäße Ausführungsform bei einem Tastverhältnis von 30%,
- Fig. 4: eine zweite erfindungsgemäße Ausführungsform einer PWM-Ansteuerung der zwei Kanäle bei einem Tastverhältnis von 30%,
- Fig. 5: die zweite erfindungsgemäße Ausführungsform bei einem Tastverhältnis von 70%,
- Fig. 6: eine erfindungsgemäße Ausführungsform einer Kombination aus PWM- und Amplitudenmodulation bei drei Kanälen und einem Tastverhältnis von 30%,
- Fig. 7: ein Zeitdiagramm einer erfindungsgemäßen Amplitudendimmung eines Kanals,
- Fig. 8: ein erfindungsgemäßes Betriebsgerät,
- Fig. 9: ein erfindungsgemäßes Beleuchtungssystem mit zwei Betriebsgeräten.

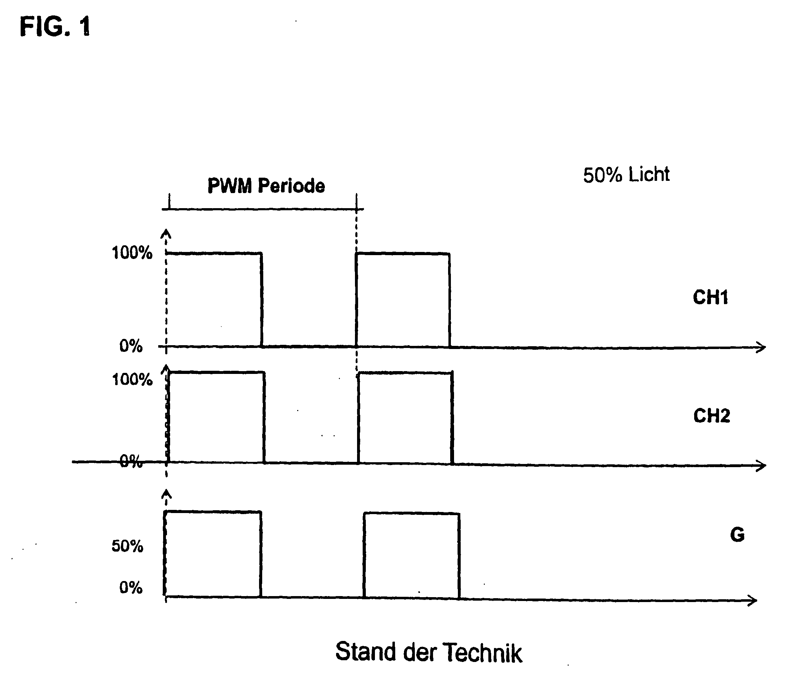

Figur 1 zeigt den Verlauf zweier PWM-betriebener Kanäle, so wie es aus dem Stand der Technik bekannt ist. Dabei wurde mithilfe der PWM-Ansteuerung eine Dimmung auf 30% vorgenommen. Die beiden Kanäle sind also nur für ca. ein Drittel der PWM-Periode eingeschaltet, wobei sie jedoch in dieser Zeit mit 100% Amplitude leuchten. Da jedoch beide Kanäle gleichzeitig an- und ausgeschaltet werden, ergibt sich auch eine Gesamtbeleuchtung, die lediglich in dieser Zeit aktiv ist. Ausgehend davon, dass die beiden Kanäle jeweils eine oder mehrere LEDs ansteuern, die zu einer einzigen Beleuchtungsvorrichtung gehören, ist diese Beleuchtungsvorrichtung folglich für eine Dauer von 70% der PWM-Periode ausgeschaltet. Daraus ergibt sich, dass ein Stroboskopeffekt auftritt, der der Frequenz der PWM-Modulation entspricht.

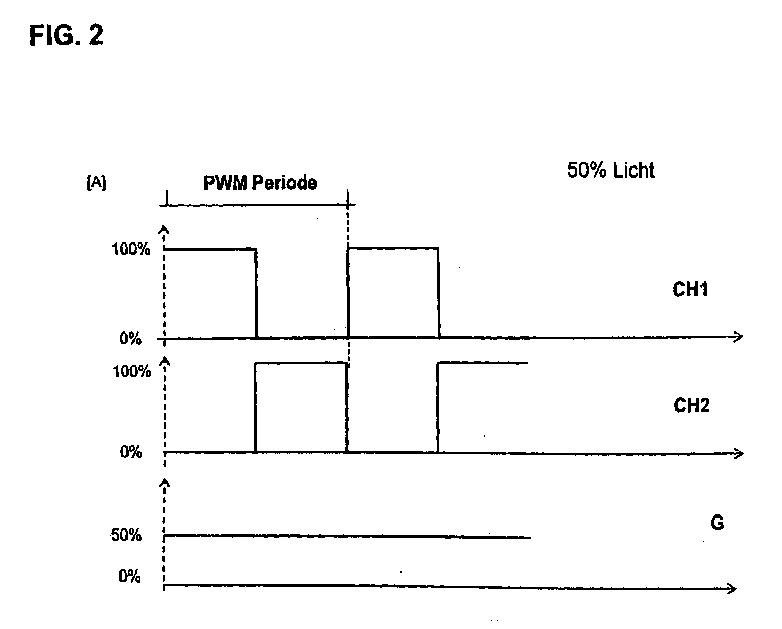

Figur 2 zeigt eine erste Ausführungsform des erfindungsgemäßen Verfahrens. Dabei werden erneut zwei Kanäle einer Beleuchtungsvorrichtung mit PWM angesteuert. Wie bereits erwähnt, können diese zwei Kanäle unabhängig voneinander eine oder mehrere LEDs oder organische LEDs ansteuern, wobei diese LEDs im Sichtbereich zueinander liegen. So ist es denkbar, dass beide Kanäle von einem Betriebsgerät gesteuert werden. Jeder Kanal kann dabei ein LED Array ansteuern. Dabei kann es sich beispielsweise um LED Arrays mit blauen LEDs handeln, die mithilfe eines Farbkonversionsmittels weißes Licht ausstrahlen. Möglich ist auch, dass jeder Kanal eine unterschiedliche LED-Farbe ansteuert. Dabei soll vorweg darauf hingewiesen werden, dass das erfindungsgemäße Verfahren keineswegs auf zwei Kanäle beschränkt ist. Vielmehr ist es möglich, dass das Verfahren drei oder auch mehrere Kanäle einbezieht. Bei drei Kanälen ist es so z.B. denkbar, dass ein Kanal rote LEDs, ein Kanal grüne LEDs und ein Kanal blaue LEDs ansteuert.

Figur 2 zeigt also zwei Kanäle, die jeweils mit einem Tastverhältnis von 50% PWM-betrieben sind. Dies bedeutet, dass die Gesamtbeleuchtung auf 50% gedimmt worden ist. Dem erfindungsgemäßen Verfahren zufolge sind also die PWM-Pulse der beiden Kanäle so zeitlich aufeinander abgestimmt, dass ein PWM-Puls des ersten Kanals in der PWM-Ausschaltzeitdauer des zweiten Kanals liegt. Dies bedeutet, dass die eine oder mehrere am ersten Kanal angeschlossenen bzw. von diesem angesteuerten LEDs dann leuchten, wenn die eine oder mehrere LEDs des zweiten Kanals ausgeschaltet sind. Da beide Kanäle jeweils nur zu 50% der PWM-Periodendauer eingeschaltet sind, ergibt sich also eine Gesamtbeleuchtung, die auf 50% der Maximalbeleuchtung reduziert ist.

In dieser ersten erfindungsgemäßen Ausführungsform liegt ein PWM-Puls des ersten Kanals in der Mitte der PWM-Ausschaltzeitdauer des zweiten Kanals. Daraus resultiert bei einer Dimmung auf 50%, bzw. auf ein PWM-Taktverhältnis von 50%, dass keine Phase auftritt, in der die Gesamtbeleuchtung gleich Null ist. Bei einer Dimmung auf 50% entspricht also die negative Flanke des PWM-Pulses des ersten Kanals der positiven Flanke des PWM-Pulses des zweiten Kanals und entsprechend anders herum.

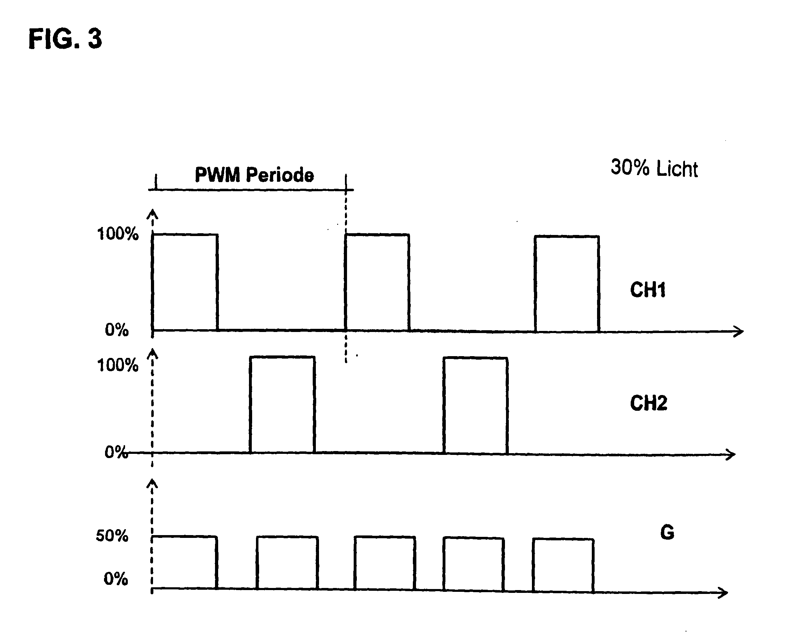

Figur 3 zeigt erneut die erste erfindungsgemäße Ausführungsform des Verfahrens, jedoch hier bei einer Dimmung auf 30%. Daraus ergibt sich, dass der PWM-Puls des ersten Kanals, der erneut in der Mitte der PWM-Ausschaltzeitdauer des zweiten Kanals liegt, diese Lücke nicht vollständig füllen kann. Es entstehen also in jeder PWM-Periode zwei Phasen in denen die Gesamtbeleuchtung gleich Null ist. Es wird dabei jedoch auch deutlich, dass die Gesamtbeleuchtung nun eine Frequenz aufweist, die doppelt so hoch wie die PWM-Frequenz ist. Außerdem sind die Ausschaltzeiten der Gesamtbeleuchtung von 70% auf 20% der PWM-Periodendauer reduziert. Damit kann dank des erfindungsgemäßen Verfahrens sichergestellt werden, dass ein für das menschliche Auge wahrnehmbare Stroboskopeffekt verhindert oder zumindest eingeschränkt werden kann.

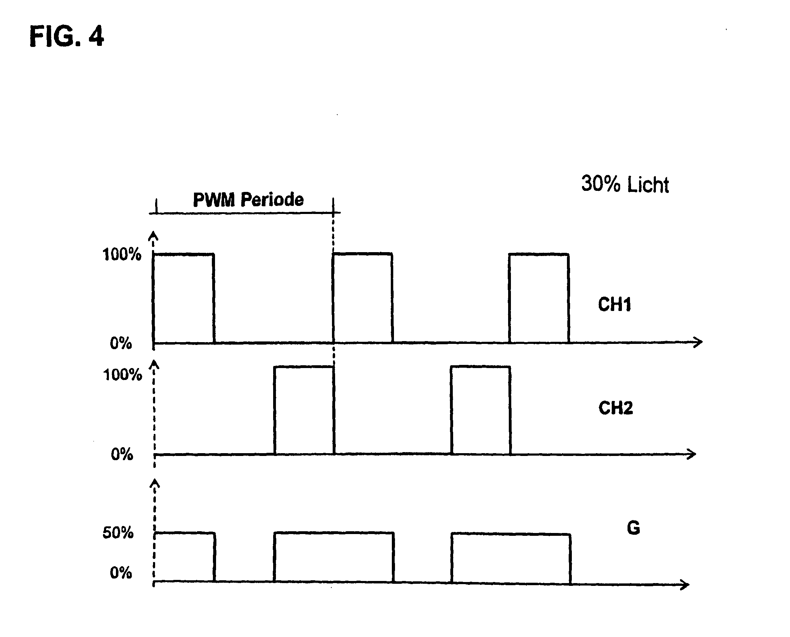

Figur 4 zeigt eine zweite Ausführungsform einer erfindungsgemäßen PWM-Modulation zweier Kanäle. Erneut werden die PWM-Pulse der zwei Kanäle zeitlich so aufeinander abgestimmt, dass ein PWM-Puls des ersten Kanals in der PWM-Ausschaltzeitdauer des zweiten Kanals liegt. Im Unterschied zur ersten erfindungsgemäßen Ausführungsform zeichnet sich diese Ausführungsform dadurch aus, dass die positive Flanke eines PWM-Pulses des ersten Kanals mit der negativen Flanke eines PWM-Pulses des zweiten Kanals zeitlich übereinstimmt. Dabei soll erneut erwähnt werden, dass wie oben beschrieben jeder Kanal beliebig eine oder mehrere LEDs, organische LED, LED-Arrays, Farb-LEDs oder Kombinationen unterschiedlicher Farb-LEDs ansteuern kann. Erfindungsgemäß ist es lediglich entscheidend, dass die Zeit, in der die gesamte Beleuchtung gleich Null ist, in einer PWM-Periode möglichst klein wird.

In dem Beispiel von Figur 4 ist die Gesamtbeleuchtung und damit das Tastverhältnis der Pulse Width Modulation auf 30% gedimmt. Für die Gesamtbeleuchtung ergibt sich also nur eine Zeit von 40% der PWM-Periode in der diese gleich Null ist. Bei einem gewöhnlichen Betreiben der beiden Kanäle, wie aus dem Stand der Technik, gezeigt im Beispiel von Figur 1, gezeigt, ergäbe sich hierfür eine Zeit von 70% der PWM-Periode, in der die Gesamtbeleuchtung gleich Null ist. Auch für diese Ausführungsform gilt, dass ein Erweitern auf mehr als zwei Kanäle eine Einschränkung bzw. eine gänzliche Verhinderung dieser Phasen bedeutet, in denen die Gesamtbeleuchtung ausgeschaltet ist.

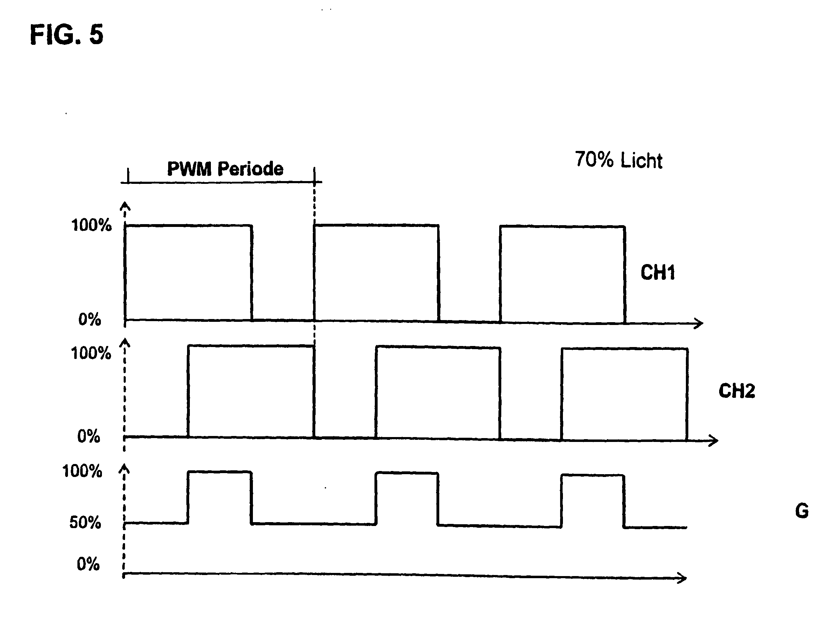

Figur 5 zeigt erneut die zweite erfindungsgemäße Ausführungsform, diesmal mit einer Dimmung auf 70%. In diesem Beispiel wird deutlich, dass bei Dimmwerten, die größer gleich 50% sind, eine unterbrechungsfreie Gesamtbeleuchtung auftritt. Dies gilt sowohl für die erste als auch die zweite erfindungsgemäße Ausführungsform.

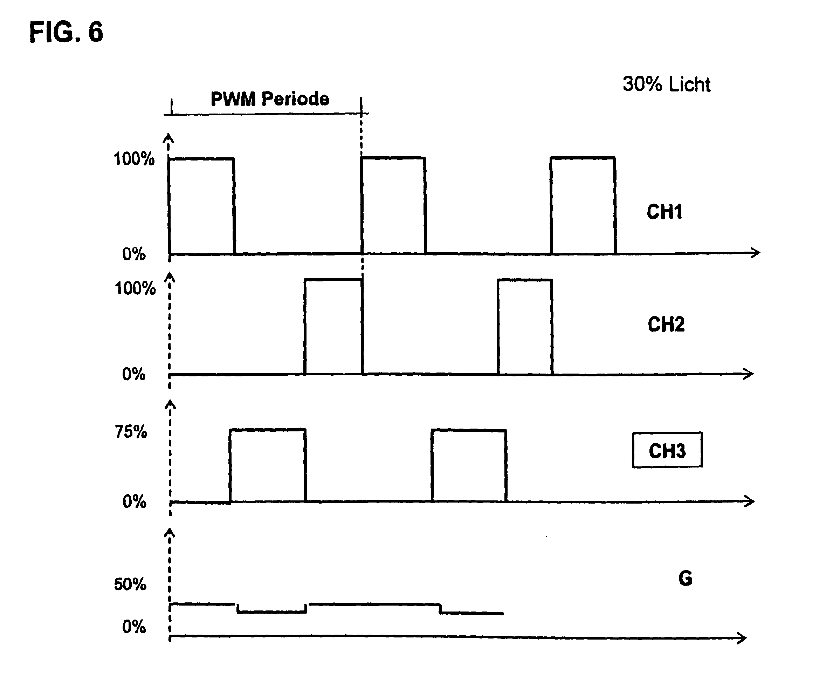

Sowohl für die erste als auch die zweite erfindungsgemäße Ausführungsform gilt, wie in den obigen Beispielen gezeigt, dass sämtliche PWM-Pulse eine Amplitude von 100% aufweisen. Aus einer solchen konstanten Amplitude ergibt sich für eine damit angesteuerte LED der Vorteil der Farbstabilität. Es ist nämlich bekannt, dass LEDs bei unterschiedlichen durch die Diode fließenden Stromstärken, die den Amplituden entsprechen, Veränderungen in ihren Leuchtfarben aufweisen können. Trotzdem kann es sinnvoll sein, einen Kanal und damit eine oder mehrere LEDs mit variierenden Amplituden bzw. einer Kombination aus PWM- und Amplitudenmodulation anzusteuern, wie es im Weiteren in der Beschreibung zu Figur 6. erläutert wird. Zur Vermeidung von Farbinstabilitäten bei Amplitudenmodulation eines Kanals können die anderen Kanäle dazu verwendet werden, die Farbveränderung der Gesamtbeleuchtung zu kompensieren. Hierfür ist denkbar, dass die Farbverschiebungseigenschaften als Funktion in Abhängigkeit von der Amplitude für jeden Kanal bzw. für die damit angesteuerten LEDs gespeichert werden.

Figur 6 zeigt ein Beispiel, das einen vorteilhaften Effekt einer Kombination aus PWM- und Amplitudenmodulation verdeutlicht. In diesem Beispiel werden drei Kanäle auf jeweils 30% gedimmt. Bei dieser entsteht bei einer erfindungsgemäßen PWM-Modulation der drei Kanäle normalerweise immer noch für 10% der PWM-Periode eine Lücke, in der das Gesamtlicht gleich Null ist. Dies bedeutet dennoch bereits eine Reduzierung von 70% auf 10% der PWM-Periodendauer.

Wie Figur 6 zeigt lässt sich jedoch auch diese Lücke mit Hilfe einer Kombination von PWM- und Amplitudenmodulation zumindest eines Kanales ganz schließen. Im Beispiel aus Figur 6 ist die Gesamtbeleuchtung und damit jeder einzelne Kanal auf 30 % reduziert. Dabei weisen die ersten beiden Kanäle ein PWM Tastverhältnis von 30 % und eine Intensität von 100 % auf. Der dritte Kanal, der jedoch PWM- und amplitudenmoduliert ist, weist ein Tastverhältnis von 40 % auf und eine Amplitude von 75 % auf. Dadurch ergibt sich auch für ihn eine Dimmung insgesamt auf 30 %. Da er jedoch ein PWM Tastverhältnis von 40 % aufweist ergibt sich mit den 30 % Tastverhältnis der beiden anderen Kanäle für das Gesamtlicht ein Tastverhältnis von 100 %.

Allgemein ausgedrückt kann also die Amplitude des wenigstens einen PWM- und amplitudenmodulierten Kanals so weit verringert werden, dass das PWM-Tastverhältnis höher als der eingestellte Dimmwert ist. Damit kann erzielt werden, dass ein unterbrechungsfreies Gesamtlicht ausgestrahlt wird. Erfindungsgemäß kann also das Verfahren vorab für einen vorgegebenen Dimmwert berechnen, wie stark die Amplitude der oder die amplitudenmodulierten Kanäle verringert werden müssen, damit die Gesamtheit der Kanäle ein unterbrechungsfreies Gesamtlicht erzeugt. Anschließend können die einzelnen Kanäle dementsprechend eingestellt werden.

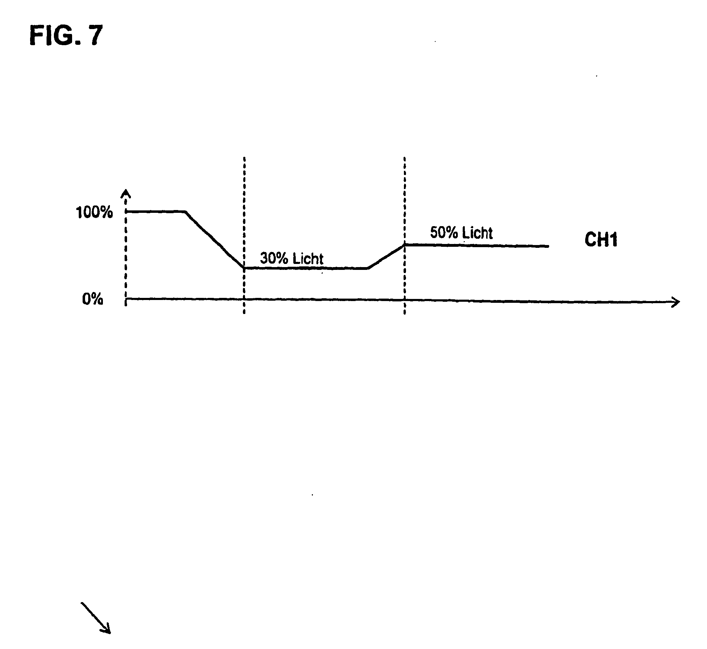

Figur 7 zeigt eine weitere erfindungsgemäße Ausführungsform eines amplitudenmodulierten Kanals. Hierdurch wird, wie das Beispiel zeigt, eine Dimmung von Licht mit 100% auf 30% erreicht und dann wieder auf 50% erhöht. Dabei wird eine Veränderung der Amplitude nicht sprunghaft sondern kontinuierlich vorgenommen. Daraus ergibt sich zum Einen der Vorteil, dass die durch diesen einen Kanal angesteuerten LED/LEDs immer leuchten. Daraus folgt, dass die Gesamtbeleuchtung nie gleich Null ist.

Weiterhin führt die Amplitudenmodulation eines oder mehrerer Kanäle zu dem vorteilhaften Effekt, dass der "beads"-Effekt vermieden werden kann. Dies ist insbesondere dadurch möglich, dass aufgrund der Amplitudenmodulation Übergänge zwischen einzelnen Leuchtintensitäten fließend sein können und somit Sprünge vermieden werden.

Außerdem soll bemerkt werden, dass, wenn mittels des erfindungsgemäßen Verfahrens erreicht wird, dass das Gesamtlicht nie gleich Null ist, der "beads"-Effekt gar nicht erst auftreten kann. Dementsprechend kann in den Beispielen aus Figur 2 oder Figur 5 kein "beads"-Effekt auftreten. Dieser kann ja nur entstehen, wenn das Gesamtlicht für eine bestimmte Zeit gleich Null ist bzw. wenn dessen Intensität sich signifikant und sprungartig verändert.

Alternativ oder zusätzlich kann auch noch die PWM-Frequenz variiert werden. So ist es speziell bei Dimmwerten zwischen 50 und 100% vorteilhaft, die PWM-Frequenz zu erhöhen. Bei kleinen Dimmwerten besteht die Möglichkeit, die PWM-Frequenz dimmwertabhängig zu machen. So kann bei kleinen Dimmwerten tendenziell auf hohe Frequenzen ausgewichen werden. Die PWM-Pulse weisen dabei fixe Zeiten auf, in denen sie eingeschaltet sind.

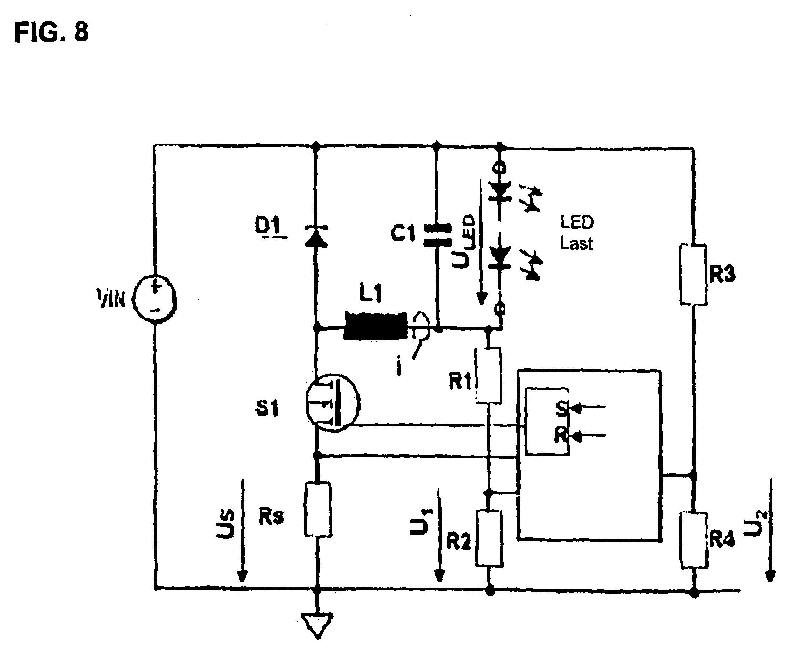

Figur 8 zeigt schematisch ein Betriebsgerät zum geregelten Betrieb von Leuchtdioden. Im dargestellten Beispiel sind zwei Leuchtdioden in Serie geschaltet, es ist jedoch auch möglich, dass sich das Betriebsgerät flexibel an die Art und die Anzahl der Leuchtdioden anpassen lässt. Dementsprechend können auch mehr oder weniger LEDs eingesetzt werden.

Dem Betriebsgerät wird eine Eingangs-Gleichspannung Vᵢₙ zugeführt, die natürlich auch eine gleichgerichtete Wechselspannung sein kann.

Eine Serienschaltung zwischen einem Halbleiterleistungsschalter S1 (beispielsweise einem MOSFET) und einer Freilaufdiode D1 energetisiert in eingeschaltetem Zustand des Schalters S1 eine Induktivität L1 mittels des durch den Schalter fließenden Stroms. Im ausgeschalteten Zustand des Schalter S1 entlädt sich die in der Spule L1 gespeicherte Energie in Form eines Stroms I durch eine Kondensator C1 und die Leuchtdiodenstrecke LED.

Es ist eine Steuer- und/oder Regelschaltung SR vorgesehen, die als Stellgröße der Regelung der Leuchtdiodenleistung die Taktung des Schalter S1 beispielsweise in Form von hochfrequenten modulierten Signalen vorgibt. Die Steuer- und/oder Regelschaltung SR kann beispielsweise eine hysteretische Stromregelung anwenden.

Mittels eines Messwiderstandes RS erfasst die Steuer- und/oder Regelschaltung SR den Strom durch den Schalter S1 (im eingeschalteten Zustand des Schalter S1).

Über einen Spannungsteiler R1, R2 kann die Steuer- und/oder Regeleinheit SR das Potenzial auf der potenzialniedrigeren Seite der LED-Strecke erfassen.

Ein weiterer Spannungsteiler R3, R4 ermöglicht die Erfassung der Versorgungsspannung.

Das Betriebsgerät wird in diesem Beispiel durch einen Buck-Konverter gebildet, kann aber auch beispielsweise durch einen Boost-Konverter, Buck-Boost-Konverter oder anderen Schaltregler oder auch durch eine Stromsenke oder eine Stromquelle gebildet werden. Der Schalter S1 wird intern durch die Steuer- und/oder Regelschaltung SR mit einer höheren Frequenz als der Frequenz angesteuert, als mit der die LED oder das LED-Modul angesteuert werden. Die interne Frequenz, mit der der Schalter S1 des Schaltreglers angesteuert wird, kann im Bereich von 10 kHZ bis zu einigen MHz liegen, während dieser internen Frequenz eine niedrige Frequenz überlagert wird, die der Frequenz des wenigstens einen PWM-Pulses entspricht. Somit kann das LED-Modul mit einem PWM-Puls mit niedrigerer Frequenz angesteuert werden, wobei der PWM-Puls einen Rippel aufgrund des hochfrequenten Betriebs des Schalter S1 des Treiber-Moduls während der Einschaltzeit aufweisen kann. Der Rippel, der sich aufgrund des hochfrequenten Betriebs des Schalter S1 des Treiber-Moduls ergeben kann, kann durch den Kondensator C1 verringert werden.

Die niedrige Frequenz des wenigstens einen PWM-Pulses, die überlagert wird, kann durch einen externen Controller wie beispielsweise einen Mikrocontroller oder eine andere zentrale Steuereinheit vorgegeben werden. Durch die Ansteuerung des Treiber-Moduls mit solchen niederfrequenten PWM-Pulsen kann das Betriebsgerät zeitweise deaktiviert werden und somit durch die PWM-Pulse eine Helligkeitssteuerung und bei Einsatz verschiedener Lichtspektren der Leuchtmittel eine Farbmischung erreicht werden.

Beispielsweise können für eine RGB-Farbmischung die drei Farben des RGB LED-Moduls von jeweils einem Betriebsgerät angesteuert werden, wobei die drei Treiber-Module über drei PWM-Kanäle angesteuert werden.

In dem Ausführungsbeispiel von Figur 8 weist also ein Betriebsgerät einen LED-Kanal auf. Das Betriebsgerät wiederrum wird von einem externen Controller gesteuert. Denkbar ist jedoch auch dass ein Betriebsgerät mehrere Kanäle aufweist. Dies ist beispielsweise dadurch möglich, dass das Betriebsgerät mehrere solcher Schaltungen, wie in Figur 8 gezeigt, umfasst. Zusätzlich kann das Betriebsgerät noch einen Controller wie einen ASIC aufweisen.

Darüber hinaus ist denkbar, dass eine Amplitudenregelung des die LEDs durchfließenden Stroms möglich ist, und hierfür die Schaltung aus Figur 7 entsprechend modifiziert wird.

Weiterhin können die LEDs optische Filterabdeckungen, die Licht aufnehmen und somit nachleuchtend sind, aufweisen. Hiermit kann der erfindungsgemäße Effekt einer konstanten Gesamtbeleuchtung verstärkt werden.

Zur Synchronisierung mehrerer Betriebsgeräte können sich diese auf signifikante Punkte der Netzversorgungsspannung, beispielsweise deren Nulldurchgänge beziehen. Dabei ist es denkbar dass ein Betriebsgerät einen Lichtsensor aufweist, der die PWM-Taktung eines anderen Betriebsgerätes misst. Das Betriebsgerät mit dem Lichtsensor kann sich dann mittels dieser Messung an der Taktung des ersten Betriebsgeräts erfindungsgemäß anpassen und sich darauf abstimmen. Als zusätzliche Referenz kann die Netzversorgungsspannung, die eine gemeinsame Zeitbasis darstellt, herangezogen werden. Eine Synchronisierung auf die Netzversorgungsspannung kann beispielsweise derart erfolgen, dass die erste Gruppe von Betriebsgeräten die pulsmodulierten Pakete ohne Zeitverzögerung direkt auf den Nulldurchgang synchronisiert und die positive Flanke eines pulsmodulierten Pulses der ersten LED gesetzt wird, während die zweite Gruppe die pulsmodulierten Pakete mit einer Zeitverzögerung auf den Nulldurchgang synchronisiert und die positive Flanke eines pulsmodulierten Pulses der zweiten LED somit zeitlich gesetzt wird. Somit können die Betreibsgeräte hinsichtlich der zeitlichen Lage ihrer pulsmodulierten Pulse abgestimmt werden. Es wäre beispielsweise aber auch möglich, dass die erste Gruppe von Betriebsgeräten auf den Nulldurchgang synchronisiert wird und weitere Gruppen auf einen vorgegebenen Pegel der Netzversorgungsspannung. Es ist aber denkbar, dass ein Betriebsgerät einen Eingang aufweist, über den es die PWM-Taktung eines anderen Betriebsgerätes überwachen und sich somit auf dieses andere Betriebsgerät abstimmen kann.

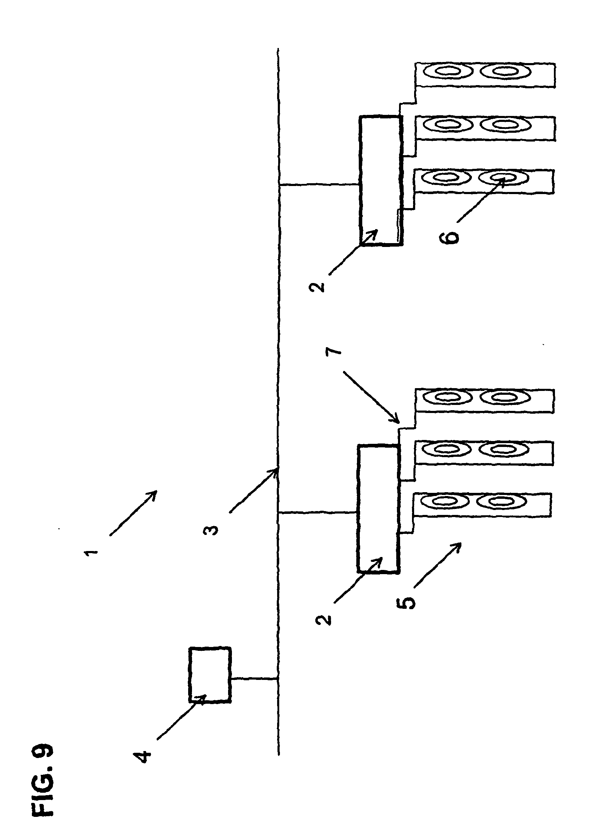

Figur 9 zeigt schematisch ein Bussystem 1 aufweisend zwei Betriebsgeräten 2. Diese sind mit einem Kommunikationsbus 3 verbunden. Ebenfalls denkbar ist, dass über den Bus die Stromversorgung erfolgt. Außerdem weist das Bussystem einen zentralen Controller 4 auf. Bei handelt es sich vorzugsweise um eine integrierte Schaltung wie einen ASIC. Jedes betriebsgerät weist wiederum drei Kanäle 7. Jeder Kanal steuert ein LED-Array 5 an. Dabei umfasst ein LED-Array mehrere LEDs, wie in diesem Beispiel angedeutet, zwei LEDs.

Die gezeigten Ausführungsbeispiele wurden anhand von Beispielen eines PWM-Betriebes (Pulsweitenmodulation) erklärt. Anstelle des PWM-Betriebes ist die Erfindung aber auch für alle anderen pulsmodulierten Betriebsarten wie beispielsweise eine Pulsfrequenzmodulation (PFM), Pulsphasenmodulation (PPM) oder auch eine Puls-Code-Modulation (PCM) anwendbar.

Grundsätzlich ist erfindungsgemäß jede beliebige Ausgestaltung eines Beleuchtungssystems denkbar. Einzig entscheidend ist, dass sich alle LEDs, die sich in Sichtweite zueinander befinden, also beispielsweise zu einer oder mehrere benachbarter Leuchten gehören, nach dem erfindungsgemäßen Verfahren angesteuert werden. Das System kann dabei mehrere solcher Leuchten aufweisen, wobei vorzugsweise jede Leuchte mittels mehrerer Kanäle von einem Betriebsgerät betrieben wird. In einer anderen Ausführungsform werden die sich in Sichtweite befindenden LEDs von mehreren Betriebsgeräten angesteuert, wobei jedes Betriebsgerät hierfür ein oder mehrere Kanäle aufweist. Ein Kommunikationsbus, der mehrere Betriebsgeräte verbindet, hat den Vorteil, dass jedem Betriebsgerät eine Gruppenzuordnung zugewiesen werden kann. Diese gibt an, wie die Lage der jeweiligen pulsmodulierten Pakete des Betriebsgerätes relativ zur gemeinsamen Zeitbasis erfolgen soll. Denkbar ist jedoch auch, dass eine solche Gruppenzuordnung über einen direkten Befehl bzw. eine direkte Angabe am Betriebsgerät erfolgt. Diese kann beispielsweise manuell erfolgen oder auch voreingestellt sein. Beispielsweise kann die Gruppenzuordnung über eine Selektion per Drehschalter am Betriebsgerät, durch Anschliessen eines Kodierelementes an einen dafür vorgesehenen Anschluss (beispielsweise ein Widerstand, wobei für verschiedene Gruppen verschiedene Widerstandswerte vorgesehen sind, oder ein auslesbares Speicherelement, auf dem die Gruppenzuordnung abgelegt ist) oder durch Überbrücken zweier für die Gruppenzuordnung vorgesehenen Kontakte (das Setzen eines sog. Jumpers, wobei vorzugsweise mehrere Kontakte für die Zuordnung zu verschiedenen Gruppen vorgesehen sind) erfolgen. Die Gruppenzuordnung kann aber auch durch eine Programmierung des Betriebsgerätes, beispielsweise über eine Schnittstelle, oder durch eine einmalige Durchführung einer Schaltsequenz, vorzugsweise mittels der Versorgungsspannung, erfolgen.

### Bezugszeichenliste

- CH 1: erster Kanal
- CH 2: zweiter Kanal
- CH 3: dritter Kanal
- G: Gesamtbeleuchtung
- Vin: Eingangs-Gleichspannung
- S1: Schalter
- D1: Freilaufdiode
- L1: Induktivität
- C1: Kondensator
- SR: Steuer- und/oder Regelschaltung
- RS: Messwiderstand
- R1, R2: Spannungsteiler
- R3, R4: Spannungsteiler
- 1: Bussystem
- 2: Betriebsgerät
- 3: Kommunikationsbus
- 4: Controller
- 5: LED-Array
- 6: LED
- 7: Kanal

## Patentansprüche

1. Verfahren zum Betrieb von in Sichtweite zueinander liegenden LEDs, die pulsmoduliert betrieben werden, wobei:
- die pulsmodulierten Pulse so zeitlich aufeinander abgestimmt werden, dass ein pulsmodulierter Puls einer ersten LED in der pulsmodulierten Ausschaltzeitdauer einer weiteren LED liegt,
- die LEDs unterschiedlichen Betriebsgeräten angehören, und
**dadurch gekennzeichnet dass**,
- sich die Betriebsgeräte autonom aufeinander abstimmen.

2. Verfahren nach Anspruch 1,
bei dem ein pulsmodulierter Puls einer ersten LED in der Mitte der pulsmodulierten Ausschaltzeitdauer einer weiteren LED liegt.

3. Verfahren nach Anspruch 1,
bei dem eine positive Flanke eines pulsmodulierten Pulses einer ersten LED mit der negativen Flanke eines pulsmodulierten Pulses einer weiteren LED zeitlich übereinstimmt.

4. Verfahren nach einem der vorhergehenden Ansprüche, bei dem wenigstens eine LED auch amplitudenmoduliert betrieben wird.

5. Verfahren nach Anspruch 4,
bei dem die Amplitude wenigstens einer LED verringert wird und entsprechend zur Konstanthaltung des zeitlichen Mittelwerts des LED-Stroms das pulsmodulierte Tastverhältnis erhöht wird, falls die Mischung des Lichts der LEDs andernfalls kein Tastverhältnis von 100% erzielt.

6. Verfahren nach einem der vorhergehenden Ansprüche, bei dem sich wenigstens zwei Betriebsgeräte auf eine gemeinsame Zeitbasis, bspw. mittels signifikanter Punkte einer Netzversorgungsspannung, vorzugsweise deren Nulldurchgänge, synchronisieren.

7. Verfahren nach einem Anspruch 6,
bei dem jedem Betriebsgerät eine Gruppenzuordnung zugweisen wird, die angibt, wie die Lage der jeweiligen pulsmodulierten Impulse relativ zur gemeinsamen Zeitbasis erfolgen soll.

8. Verfahren nach einem Anspruch 7,
bei eine Gruppenzuordnung über einen Busbefehl oder über eine direkte Eingabe am Betriebsgerät erfolgt.

9. Verfahren nach einem der vorhergehenden Ansprüche, bei dem ein erstes Betriebsgerät eine autonome Abstimmung mit einem zweiten Betriebsgerät vornimmt, indem das erste Betriebsgerät die zeitliche Lage der pulsmodulierten Pakete des zweiten Betriebsgeräts erfasst und sich zeitlich darauf abstimmt.

10. Verfahren nach Anspruch 9,
bei dem die zeitliche Lage der pulsmodulierten Pakete des zweiten Betriebsgeräts in Relation zu einer gemeinsamen Zeitbasis zwischen dem ersten und zweiten Betriebsgerät, bspw. mittels signifikanter Punkte einer Netzversorgungsspannung, vorzugsweise deren Nulldurchgänge, bestimmt wird.

11. Verfahren nach Anspruch 9 oder 10,
bei dem die Erfassung der zeitlichen Lage der pulsmodulierten Pakete des zweiten Betriebsgeräts durch das erste Betriebsgerät über einen Lichtsensor erfolgt.

12. Schaltung, insbesondere integrierte Schaltung wie µC oder ASIC, die zur Durchführung eines Verfahrens nach einem der vorhergehenden Ansprüche ausgelegt ist.

13. Betriebsgerät für eine oder mehrere LEDs, aufweisend:
- eine Ansteuerschaltung zum Ansteuern der mindestens einen LED, die einen Versorgungsstrom in einen Strom mit für die mindestens eine LED geeignete Parameter umwandelt;
- eine Schaltung, insbesondere integrierte Schaltung wie ein µC oder ASIC, die zur Durchführung eines Verfahrens nach einem der vorhergehenden Ansprüche ausgelegt ist und die Ansteuerschaltung über Puls-Modulation und/oder Amplituden-Modulation steuert.

14. Beleuchtungssystem aufweisend:
- Wenigstens zwei mit Leuchtmitteln verbundene Betriebsgeräte nach Anspruch 13.

## Claims

1. A method for the operation of LEDs located in sight of each other, which are operated by pulse modulation, whereby:
- the pulse-modulated pulses are temporally coordinated with one another so that a pulse-modulated pulse of a first LED occurs in the pulse-modulated switched-off period of another LED,
- the LEDs belong to different operating units, and
**characterised in that**
- the operating units are autonomously phased with each other.

2. Method according to claim 1, whereby a pulse-modulated pulse of a first LED occurs in the middle of the pulse-modulated switched-off period of a further LED.

3. Method according to claim 1, whereby a positive flank of a pulse-modulated pulse of a first LED is temporally coordinated with the negative flank of a pulse-modulated pulse of a further LED.

4. Method according to any one of the preceding claims, whereby the at least one LED is also operated by amplitude modulation.

5. Method according to claim 4, whereby the amplitude of at least one LED is decreased, while the pulse-modulated duty cycle is correspondingly increased in order to maintain a constant time average value of the LED current in the event that the mixing of the light of the LEDs does not otherwise achieve a duty cycle of 100%.

6. Method according to any one of the preceding claims, whereby at least two operating units are synchronised with a common time base, for example, by means of significant points of a mains supply voltage, preferably the zero crossings.

7. Method according to claim 6, whereby each operating unit is part of a group assignment, which indicates when the respective pulse-modulated pulse is to occur relative to the common time base.

8. Method according to claim 7, whereby a group assignment takes place via a bus command or via a direct input to the operating unit.

9. Method according to any one of the preceding claims, whereby a first operating unit performs an autonomous coordination with a second operating unit, and whereby the first operating unit detects the timing of the pulse-modulated packets of the second operating unit and coordinates its timing with it.

10. Method according to claim 9, whereby the temporal position of the pulse-modulated packets of the second operating unit is determined in relation to a common time base of the first and second operating units, e.g. by means of significant points of a power supply voltage, preferably the zero crossings.

11. Method according to claim 9 or 10, whereby the detection of the temporal position of the pulse-modulated packets of the second operating unit by the first operating unit is performed via a light sensor.

12. The circuit, in particular an integrated circuit such as a µC or ASIC that is designed to implement a method according to any one of the preceding claims.

13. Operating unit for one or more LEDs, comprising:
- a control circuit to control the at least one LED, which converts a supply current into a current with suitable parameters for the at least one LED;
- a circuit, in particular an integrated circuit such as a µC or ASIC, which is designed to implement a method according to any one of the preceding claims, and controls the control circuit via pulse modulation and/or amplitude modulation.

14. Illumination system comprising:
- at least two operating units associated with light sources according to claim 13.

## Revendications

1. Procédé de gestion de LED situées à distance de visibilité l'une de l'autre qui sont gérées de façon modulée par impulsion, dans lequel :
- les impulsions modulées par impulsion sont accordées dans le temps l'une par rapport à l'autre de telle sorte qu'une impulsion modulée par impulsion d'une première LED se situe dans la période de temps d'arrêt modulée par impulsion d'une LED suivante, et
- les LED appartiennent à des appareils de gestion différents,
**caractérisé en ce que** les appareils de gestion s'accordent l'un avec l'autre de façon autonome.

2. Procédé selon la revendication 1,
dans lequel une impulsion modulée par impulsion d'une première LED se situe au milieu de la période de temps d'arrêt modulée par impulsion d'une LED suivante.

3. Procédé selon la revendication 1,
dans lequel un flanc positif d'une impulsion modulée par impulsion d'une première LED coïncide dans le temps avec le flanc négatif d'une impulsion modulée par impulsion d'une LED suivante.

4. Procédé selon l'une des revendications précédentes,
dans lequel au moins une LED est également gérée de façon modulée en amplitude.

5. Procédé selon la revendication 4,
dans lequel l'amplitude d'au moins une LED est réduite, et en conséquence, de façon à maintenir constante la valeur moyenne dans le temps du courant de la LED, le rapport cyclique modulé par impulsion est augmenté si la combinaison de la lumière des LED ne produirait pas autrement un rapport cyclique de 100 %.

6. Procédé selon l'une des revendications précédentes,
dans lequel au moins deux appareils de gestion se synchronisent sur une base de temps commune, par exemple au moyen de points importants d'une tension d'alimentation du réseau, de préférence leurs passages par zéro.

7. Procédé selon la revendication 6,
dans lequel une affectation de groupe est attribuée à chaque appareil de gestion, laquelle indique comment la position des impulsions modulées par impulsion respectives par rapport à la base de temps commune doit être établie.

8. Procédé selon la revendication 7,
dans lequel une affectation de groupe est réalisée par le biais d'une commande de réseau ou par le biais d'une saisie directe sur l'appareil de gestion.

9. Procédé selon l'une des revendications précédentes,
dans lequel un premier appareil de gestion effectue un accord autonome avec un deuxième appareil de gestion en ce que le premier appareil de gestion détecte la position dans le temps des paquets modulés par impulsion du deuxième appareil de gestion et il s'accorde dans le temps par rapport à celle-ci.

10. Procédé selon la revendication 9,
dans lequel la position dans le temps des paquets modulés par impulsion du deuxième appareil de gestion est déterminée par rapport à une base de temps commune entre les premier et deuxième appareils de gestion, par exemple au moyen de points importants d'une tension d'alimentation du réseau, de préférence leurs passages par zéro.

11. Procédé selon la revendication 9 ou 10,
dans lequel la détection de la position dans le temps des paquets modulés par impulsion du deuxième appareil de gestion est réalisée par le premier appareil de gestion au moyen d'un capteur de lumière.

12. Commutation, en particulier commutation intégrée comme une µC ou ASIC, qui est conçue pour mettre en oeuvre un procédé selon l'une des revendications précédentes.

13. Appareil de gestion pour une ou plusieurs LED, qui présente :
- une commutation de commande pour commander l'au moins une LED, qui convertit un courant d'alimentation dans un courant ayant des paramètres appropriés pour l'au moins une LED ;
- une commutation, en particulier une commutation intégrée comme une µC ou ASIC, qui est conçue pour mettre en oeuvre un procédé selon l'une des revendications précédentes et commande la commutation de commande par modulation d'impulsion et/ou par modulation d'amplitude.

14. Système d'éclairage qui présente :
- au moins deux appareils de gestion selon la revendication 13 reliés à des sources d'éclairage.
